# EUROPÄISCHE PATENTANMELDUNG

(11) **EP 0 911 782 A2**
(43) Veröffentlichungstag der Anmeldung: **28.04.1999**
(21) Anmeldenummer: 98116559.0
(22) Anmeldetag: 02.09.1998
(51) Int. Cl.: G08G 1/0968

(54) **Verfahren zum Betrieb eines Navigationssystems für ein Fahrzeug und Navigationssystem für ein Fahrzeug**

(30) Priorität: 17.10.1997 DE 19745901
(71) Anmelder: ROBERT BOSCH GMBH, 70442 Stuttgart (DE)
(72) Erfinder: Kynast, Andreas, 31139 Hildesheim (DE); Kersken, Ulrich, 31199 Diekholzen (DE)

(57) **Zusammenfassung**

Die Erfindung betrifft ein Verfahren zum Betrieb eines Navigationssystems für ein Fahrzeug, insbesondere für ein Kraftfahrzeug, bei dem von einem Ortungssystem Daten zur geographischen Position des Fahrzeugs ermittelt und an eine Einrichtung zur elektronischen Datenverarbeitung mit Zugriff auf eine Datenbasis und eine digitale Straßenkarte übertragen werden und anhand dieser Daten der Standort des Fahrzeugs auf einer digitalen Straßenkarte bestimmt und ggf. die weitere Fahrtroute des Fahrzeugs berechnet wird, wobei an den Fahrer des Fahrzeugs akustisch oder visuell Meldungen ausgegeben werden. Erfindungsgemäß ist vorgesehen, daß in die Datenbasis und/oder die digitale Straßenkarte Datensätze bzw. geographische Punkte aufgenommen werden, die der geographischen Position von dynamischen Verkehrshinweisen entsprechen, und daß beim Erreichen einer diesen Datensätzen bzw. einem solchen geographischen Punkt entsprechenden geographischen Position durch das Fahrzeug eine Meldung ausgegeben wird. Die Erfindung betrifft ferner ein Navigationssystem zur Durchführung dieses Verfahrens.

## Beschreibung

### Stand der Technik

Die Erfindung bezieht sich auf ein Verfahren zum Betrieb eines Navigationssystems für ein Fahrzeug, insbesondere ein Kraftfahrzeug sowie auf ein derartiges Navigationssystem.

Navigationssysteme für Fahrzeuge, insbesondere Kraftfahrzeuge, sind bekannt. Derartige Navigationssysteme dienen in Fahrzeugen dazu, die aktuelle geographische Position des Fahrzeugs Zu bestimmen, die günstigste Fahrtroute zu berechnen und dem Fahrer Anweisungen zur Fahrtroute zu geben.

Herkömmliche autonome Navigationssysteme benötigen Informationen, die für die Bestimmung des aktuellen Standorts des Fahrzeugs und die Berechnung der Fahrtroute notwendig sind. Dazu gehören z. B. Straßenverläufe, Abbiegebedingungen und Einbahnstraßen. Diese Daten werden im allgemeinen in Form einer Datenbasis auf Massenspeichern wie z. B. CD-ROM im Auto mitgeführt. Zur Ergänzung der Datenbasis sind im allgemeinen auch ein oder mehrere digitale Straßenkarten und/oder Stadtpläne vorgesehen und auf dem Massenspeicher abgespeichert. Ferner ist ein Ortungssystem notwendig, das die aktuelle geographische Position des Fahrzeugs, ausgedrückt in Längen- und Breitengrad feststellt. Am gebräuchlichsten ist das sogenannte 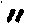 Global Positioning System" (GPS). Dieses System bestimmt die aktuelle geographische Position des Fahrzeugs in Längen- und Breitengrad mit Hilfe von Satellitendaten. Ein mit einer Navigations-Software bestückter Mikroprozessor korreliert die von dem Ortungssystem gelieferten Informationen mit den Daten in der Datenbank bzw. der relevanten digitalen Landkarte oder des Stadtplans und bestimmt daraus den aktuellen Standort des Fahrzeugs auf einer bestimmten Straße. Danach kann der Mikroprozessor die günstigste Fahrtroute berechnen. Hinweise an den Fahrer werden entweder auf einem Display visuell ausgegeben oder mit Hilfe eines Sprachspeichers als Sprachmeldung akustisch ausgegeben. Während der Fahrt wird dem Fahrer z. B. mitgeteilt, wann und wo er in welche Richtung abbiegen muß.

Nachteilig an diesem System ist, daß dynamische Verkehrsinformationen nicht in die Datenbasis aufgenommen werden können. Unter dynamischen Verkehrsinformationen werden diejenigen Signale im Straßenverkehr verstanden, die in Abhängigkeit von der Zeit und von nicht vorhersehbaren Ereignissen ihren Informationsgehalt ändern. Dazu gehören z. B. Wechselverkehrszeichen, die in Abhängigkeit des Verkehrsaufkommens variable Hinweise geben, z. B. den Verkehr bei Staus oder sonstigen Störungen auf andere Straßen umleiten. Zu den dynamischen Verkehrsinformationen gehören auch Informationen von Parkhausbeschilderungen, die dem Fahrer anzeigen, ob ein Parkhaus voll belegt ist oder ob noch Plätze frei sind. Ein weiteres Beispiel sind Beschilderungen von Parkleitsystemen und Park-and-Ride-Systemen, die signalisieren, welcher Parkplatz angefahren werden kann und welcher nicht.

Alle diese dynamischen Verkehrsinformationen dienen der präventiven Verkehrslenkung, d. h. dem Vermeiden von Staus und sonstigen Verkehrsstörungen. Derartige veränderliche Informationen können nicht als statische Information in eine Datenbank aufgenommen werden. Sie bleiben daher unberücksichtigt. Das hat zur Folge, daß Fahrtempfehlungen des Navigationssystems nicht den aktuellen - und ggf. besseren - Fahrtempfehlungen von dynamischen Verkehrsinformationen entsprechen können, da sie schon im Vorfeld, d. h. bevor eine Störung eintritt, gesetzt werden.

### Vorteile der Erfindung

Das erfindungsgemäße Verfahren zum Betrieb eines Navigationssystems für ein Fahrzeug mit den Merkmalen des Anspruchs 1 hat demgegenüber den Vorteil, daß der Fahrer auf die Existenz von dynamischen Verkehrsinformationen hingewiesen werden kann, obwohl der genaue Informationsgehalt nicht bekannt ist. Das erfindungsgemäße Verfahren hat ferner den Vorteil, das die statische Datenbasis nicht geändert werden muß, wenn sich der Informationsgehalt der dynamischen Beschilderung an bestimmten Stellen ändert.

Das erfindungsgemäße Verfahren ermöglicht ferner eine einheitliche und einfache Text- und/oder Sprachausgabe für Informationen, die sich in ihrem Informationsgehalt unterscheiden können. Mit dem erfindungsgemäße Verfahren können dem Fahrer verschiedene Informationen, z. B. zu Wechselverkehrszeichen, Parkhausbeschilderungen oder Park-andRide-Beschilderungen gegeben werden.

Durch die in den Unteransprüchen genannten Maßnahmen sind vorteilhafte Weiterbildungen und Verbesserungen des im Anspruch 1 angegebenen Verfahrens möglich.

Das erfindungsgemäße Navigationssystem ist dementsprechend einfach im Aufbau, muß nicht ständig an wechselnde dynamische Informationen angepaßt werden und zeichnet sich durch einen einfachen Aufbau und eine einfache Ausgabe von Meldungen aus.

### Zeichnung

Im folgenden wird die Erfindung anhand eines Ausführungsbeispiels mit Bezug auf die Zeichnung näher erläutert. Es zeigen:

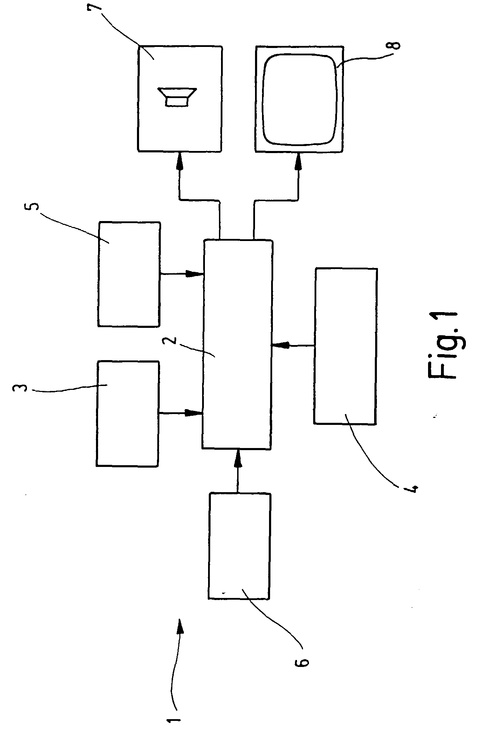

- Figur 1: ein Blockschaltbild mit dem Aufbau eines erfindungsgemäßen Navigationssystems;
- Figuren 2a bis 2c: schematisch verschiedene Möglichkeiten zum Setzen von Markierungspunkten.

Ausgangspunkt ist ein Fahrzeug, im Ausführungsbeispiel ein Fahrzeug mit einem Navigationssystem 1. Dieses Navigationssystem 1 weist einen mit einer Navigationssoftware bestückten Mikroprozessor 2, ein Ortungssystem 3, einen Massenspeicher 4 in Form einer CD-ROM mit einer Datenbank und einer digitalen Straßenkarte, einen Arbeitsspeicher 5, einen Sprachspeicher 6, eine akustische Ausgabeeinrichtung 7 und eine visuelle Ausgabeeinrichtung 8 auf. Bei dem Ortungssystem 3 kann es sich im Ausführungsbeispiel z.B. um das an sich bekannte Global Positioning System (GPS) handeln. Die visuelle Ausgabeeinrichtung 8 besteht in einer Anzeige, z.B. in Form eines Flüssigkristall-Displays. Die Anzeige kann z. B. im Armaturenbrett des Fahrzeugs eingelassen sein. Die akustische Ausgabeeinrichtung 7 besteht in einem oder mehreren Lautsprechern im Armaturenbrett, in der Türverkleidung oder in vergleichbaren Positionen im Inneren des Fahrzeugs.

Die Datenbasis enthält eine Sammlung von Ortsdaten und allgemeinen Fahrtbedingungen, wie Ampelanlagen, Vorfahrtsvorschriften an Kreuzungen, Abbiegebedingungen, Einbahnstraßen, Entfernungen in Kilometern, Zufahrtsbeschränkungen wie z. B. Obergrenzen für Gewicht oder Höhe des Fahrzeugs und dergleichen mehr. Die digitale Straßenkarte kann eine Sammlung von Straßenkarten, Stadtplänen u. dgl. bestimmter Regionen oder Staaten, z. B. der Bundesrepublik Deutschland umfassen.

Um den Fahrer nun auf die Existenz dynamischer Verkehrshinweise aufmerksam zu machen und ihn auf die von diesen Hinweisen gegebene Fahrtempfehlung hinzuweisen, ist die Datenbasis um bestimmte Daten ergänzt. Dabei handelt es sich um Datensätze, die in die Datenbasis aufgenommen sind. Diese Datensätze repräsentieren die Position und Natur der dynamischen Verkehrshinweise, also die Information, ob es sich bspw. um ein Wechselverkehrszeichen, eine Messebeschilderung oder eine Parkhausbeschilderung handelt. Ferner sind in die digitale Straßenkarte geographische Punkte mit bestimmten Merkmalen aufgenommen. Jeder dieser aufgenommenen geographischen Punkte auf der digitalen Straßenkarte entspricht der geographischen Position eines realen dynamischen Verkehrshinweises. Dabei wird davon ausgegangen, daß sich die geographische Position derartiger dynamischer Verkehrshinweise, z. B. Wechselverkehrsschilder und sonstige dynamische Hinweisschilder, bekannt ist und sich über einen längeren Zeitraum nicht ändert.

Der Mikroprozessor korreliert laufend die vom Ortungssystem übermittelten Längen- und Breitengrade mit den Daten der Datenbasis und berechnet daraus den aktuellen Standort des Fahrzeugs auf der digitalen Straßenkarte. Kommt er dabei zu dem Ergebnis, daß die geographische Position des Fahrzeugs mit der geographischen Position eines dynamischen Hinweisschildes übereinstimmt, wird die akustische Ausgabe oder die visuelle Ausgabe des Navigationssystems angesteuert und eine entsprechende Meldung ausgegeben. Die Meldung informiert den Fahrer über die Existenz und die Natur des dynamischen Verkehrshinweises. Derartige Meldungen können z. B. lauten: 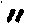 Beachten Sie die aktuellen Hinweise des Wechselverkehrszeichens" ; 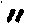 Beachten Sie die aktuellen Hinweise des Verkehrsleitsystems" ; 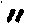 Beachten Sie die aktuellen Hinweise des Parkleitsystems" ; 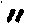 Beachten Sie die aktuellen Informationen zu dem XY-Parkhaus" ; 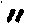 Beachten Sie die P+R-Beschilderung" .

Besonders vorteilhaft und für den Fahrer günstiger ist es, wenn er die Meldung in einer gewissen Entfernung vor dem dynamischen Verkehrshinweis erhält, damit er sich darauf einrichten kann. Dazu ist eine zweite Gruppe von Daten aufgenommen. Dabei handelt es sich um Markierungspunkte, die in die digitale Straßenkarte aufgenommen sind. Die Markierungspunkte können einprogrammiert sein oder vom Mikroprozessor on-line berechnet werden. Jeder Markierungspunkt bezeichnet den geographischen Ort, an dem in einer bestimmten Entfernung von der geographischen Position des dynamischen Verkehrshinweises die Meldung ausgegeben werden soll. Diese Markierungspunkte sind vorzugsweise so gelegt, daß die Meldung in einer Entfernung von etwa 20 bis 500 Metern vor dem dynamischen Verkehrshinweis ausgegeben wird. Kommt der Mikroprozessor, wie oben beschrieben, zu dem Ergebnis, daß die geographische Position des Fahrzeugs mit der geographischen Position eines Markierungspunktes übereinstimmt, wird die entsprechende Meldung ausgegeben.

Noch günstiger ist es, wenn statt eines einzelnen Markierungspunktes oder einzelner Markierungspunkte mehrere, z.B. eine Gruppe oder ein Ring von Markierungspunkten um den betreffenden geographischen Punkt in die Datenbasis aufgenommen sind oder online berechnet werden.

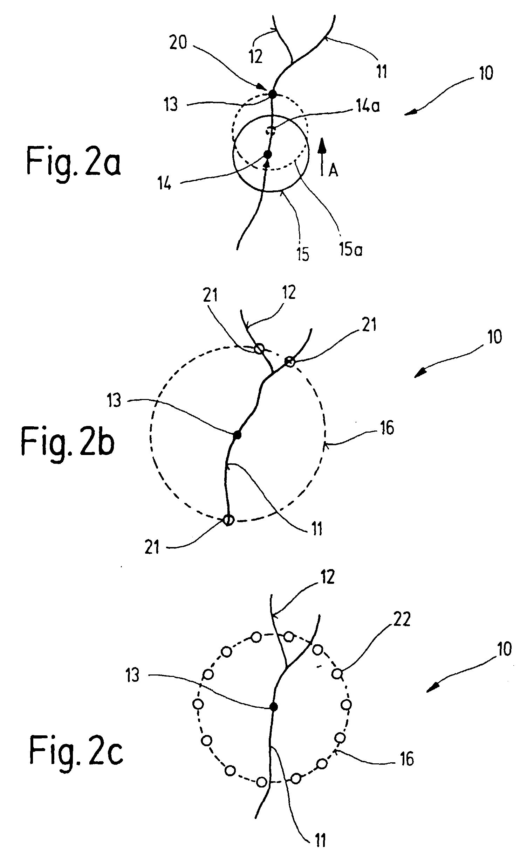

Für das Setzen der Markierungspunkte gibt es mehrere Möglichkeiten, die in den Figuren 2a bis 2c schematisch illustriert sind. Das Setzen kann durch Speichern der entsprechenden Daten in der Datenbasis (4) oder durch on-line-Berechnung erfolgen. Die Figuren 2a bis 2c zeigen jeweils einen Ausschnitt aus einer digitalen Straßenkarte 10 mit einer Hauptstraße 11 und einer in die Hauptstraße 11 einmündenden Nebenstraße 12. An der Hauptstraße 12 befindet sich ein dynamischer Verkehrshinweis 13, z. B. in Form eines Wechselverkehrsschildes. In Figur 2a zusätzlich ein Fahrzeug mit der Bezugszeichen 14 bezeichnet.

Eine erste Möglichkeit besteht darin, einen dynamischen Markierungspunkt 20 zu setzen. Dazu wird durch den Mikroprozessor in einem bestimmten Radius vom Fahrzeug 14 ein Kreis 15 markiert. Der Kreis 15 bewegt sich mit dem Fahrzeug 14 in Richtung des Pfeils A in Figur 2a, so daß dieses immer etwa den Kreismittelpunkt bildet. Dies ist durch die gestrichelt dargestellte Position des Fahrzeugs 14a und den zugehörigen Kreis 15a dargestellt. Der Markierungspunkt 20 ist definiert durch den Schnittpunkt zwischen dem Umfang des Kreises 15a und der geographischen Position des Fahrzeugs 14a. Sobald der Kreisumfang die geographische Position des dynamischen Verkehrshinweises 13 schneidet, wird die Meldung ausgegeben. Die Bewegung des Fahrzeugs 14, 14a wird also berücksichtigt. Zum Beispiel kann der Radius des Kreises 15, 15a vom Mikroprozessor in Abhängigkeit von der Geschwindigkeit des Fahrzeuges vergrößert werden. Je schneller das Fahrzeug 14, 14a ist, desto eher kommt die Meldung. Diese Möglichkeit ist somit nutzerorientiert.

Weitere Möglichkeiten gehen von statischen Markierungspunkten 21, 22 aus. Bspw. kann von der geographischen Position des dynamischen Verkehrshinweises 13 als Mittelpunkt ausgehend ein Kreis 16 mit einem bestimmten Durchmesser, vorzugsweise etwa 40 bis 1000 Meter, gezogen werden (Figuren 2b, 2c). An jedem Schnittpunkt einer Straße 11, 12 mit dem Kreisumfang wird ein Markierungspunkt 21 auf die Straße gesetzt (Figur 2b). Eine Anzahl von Markierungspunkten 22 kann aber auch in einem bestimmten Ab-stand auf den Kreisumfang gesetzt werden (Figur 2c). Dabei ist ein konstanter Abstand zwischen den Markierungspunkten (22) besonders günstig. Diese Möglichkeiten sind an die Verkehrslage angepaßt.

Sobald der Mikroprozessor feststellt, daß die geographische Position des Fahrzeugs mit der geographischen Position eines Markierungspunktes 21, 22 übereinstimmt, wird eine visuelle oder akustische Ausgabe angestoßen, die den Fahrer auf den in einem bestimmten Abstand befindlichen dynamischen Verkehrshinweis 13 aufmerksam macht.

In einem Anwendungsbeispiel wird von einer Datenbasis ausgegangen, in der zusätzlich Datensätze zu Orten enthalten sind, an denen Parkhausinformationen durch Wechselschilder angezeigt werden. Die zusätzlichen Datensätze in der Datenbasis tragen das Merkmal 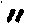 Parkhausinformation" . Die Wechselschilder für die Parkhausinformationen können die Zustände 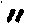 Frei" oder 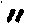 Besetzt" anzeigen. Außerdem wird im Zustand 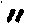 Frei" die Anzahl der freien Plätze angezeigt. Nähert sich ein Fahrzeug mit dem erfindungsgemäßen Navigationssystem einem Punkt, der dem in der Ortsdatenbank zusätzlich eingetragenen Datensatz mit dem Merkmal 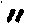 Parkhausinformation" entspricht, bis auf einen festgelegten Abstand, dann wird eine Nachricht ausgegeben. Diese Nachricht ist auf einem kleinen Bildschirm-Display im Fahrzeug abzulesen. Sie besteht aus der Darstellung eines Parkhaus-Logos und aus dem Text 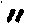 Bitte beachten Sie die Parkhausanzeige.!" . Der Text kann auch durch eine akustische Ausgabe ausgegeben werden. Der Fahrer kann dann gezielt auf das sich nähernde Wechselschild achten.

Erfindungsgemäß ist also vorgesehen, daß die Datenbasis mit Datensätzen ergänzt wird, die bestimmte Merkmale aufweisen. Die zusätzlichen Dateneinträge in der Datenbasis weisen auf dynamische Informationen hin. Nähert sich ein Fahrzeug mit dem erfindungsgemäßen Navigationssystem einem dieser Orte, wird dem Fahrer eine Nachricht übermittelt.

## Patentansprüche

1. Verfahren zum Betrieb eines Navigationssystems für ein Fahrzeug, insbesondere für ein Kraftfahrzeug, bei dem von einem Ortungssystem Daten zur geographischen Position des Fahrzeugs ermittelt und an eine Einrichtung zur elektronischen Datenverarbeitung mit Zugriff auf eine Datenbasis und eine digitale Straßenkarte übertragen werden und anhand dieser Daten der Standort des Fahrzeugs auf einer digitalen Straßenkarte bestimmt und ggf. die weitere Fahrtroute des Fahrzeugs berechnet wird, wobei an den Fahrer des Fahrzeugs akustisch oder visuell Meldungen ausgegeben werden, dadurch gekennzeichnet, daß in die Datenbasis und/oder die digitale Straßenkarte Datensätze bzw. geographische Punkte aufgenommen werden, die der geographischen Position von dynamischen Verkehrshinweisen entsprechen, und daß beim Erreichen einer diesen Datensätzen bzw. einem solchen geographischen Punkt entsprechenden geographischen Position durch das Fahrzeug eine Meldung ausgegeben wird.

2. Verfahren nach Anspruch 1, dadurch gekennzeichnet, daß Datensätze bzw. geographische Punkte zu geographischen Positionen von Wechselverkehrsschildern, Parkhaus-Wechselschildern und/oder Wechselschildern von Parkleitsystemen in die Datenbasis bzw. die digitale Straßenkarte aufgenommen werden.

3. Verfahren nach einem der vorhergehenden Ansprüche, dadurch gekennzeichnet, daß in die digitale Straßenkarte zu jedem Datensatz bzw. geographischen Punkt mindestens ein Markierungspunkt aufgenommen wird, der einer vorgegebenen geographischen Position relativ zu jeder geographischen Position eines dynamischen Verkehrshinweises entspricht und das beim Erreichen der diesem Markierungspunkt entsprechenden geographischen Position durch das Fahrzeug eine Meldung ausgegeben wird.

4. Verfahren nach einem der vorhergehenden Ansprüche, dadurch gekennzeichnet, daß die Datensätze, geographischen Punkte und/oder Markierungspunkte programmiert oder on-line berechnet werden.

5. Verfahren nach Anspruch 3 oder 4, dadurch gekennzeichnet, daß von der Einrichtung zur elektronischen Datenverarbeitung einen Kreis mit dem Fahrzeug als Mittelpunkt berechnet und als Markierungspunkt der Schnittpunkt der geographischen Position des dynamischen Verkehrshinweises mit dem Umfang eines Kreises, dessen Mittelpunkt das Fahrzeug ist, gewählt wird.

6. Verfahren nach Anspruch 3 oder 4, dadurch gekennzeichnet, daß von der Einrichtung zur elektronischen Datenverarbeitung ein Kreis mit der geographischen Position des dynamischen Verkehrshinweises als Mittelpunkt berechnet und als Markierungspunkt jeder Schnittpunkt einer auf der digitalen Straßenkarte verzeichneten Straße mit dem Umfang des Kreises gewählt wird.

7. Verfahren nach Anspruch 3 oder 4, dadurch gekennzeichnet, daß von der Einrichtung zur elektronischen Datenverarbeitung ein Kreis mit der geographischen Position des dynamischen Verkehrshinweises als Mittelpunkt berechnet und mehrere Markierungspunkte auf dem Umfang des Kreises gesetzt werden.

8. Verfahren nach einem der vorhergehenden Ansprüche, dadurch gekennzeichnet, daß ferner die geographischen Positionen von Servicepunkten wie Tankstellen, Telefonen, Werkstätten und dergleichen und/oder von touristischen Zielen in die Datenbasis aufgenommen werden.

9. Navigationssystem (1) für ein Fahrzeug, insbesondere ein Kraftfahrzeug, welches eine Datenbasis (4), eine digitale Straßenkarte (10), ein Ortungssystem (3) zur Bestimmung der geographischen Position des Kraftfahrzeugs, eine Einrichtung (2) zur elektronischen Datenverarbeitung zur Bestimmung des Standortes des Fahrzeugs in der digitalen Straßenkarte (10) und ggf. zur Berechnung der Fahrtroute sowie ein akustisches (7) und/oder visuelles (8) Ausgabesystem zur Ausgabe von Meldungen an den Fahrer des Fahrzeugs aufweist, wobei eine Übertragung von Daten aus der Datenbasis in die Einrichtung (2) vorgesehen ist, dadurch gekennzeichnet, daß die Datenbasis (4) zusätzliche Datensätze enthält, die der geographischen Position von dynamischen Verkehrsinformationen (13) entsprechen und daß das Erreichen dieser geographischen Position durch das Fahrzeug (14) die Ausgabe einer Meldung aus-löst.

10. Navigationssystem nach Anspruch 9, dadurch gekennzeichnet, daß die Datenbasis (4) Datensätze enthält, die der geographischen Position von Wechselverkehrsschildern, Parkhaus-Wechselschildern und/oder Wechselschildern von Parkleitsystemen entsprechen.

11. Navigationssystem nach Anspruch 9 oder 10, dadurch gekennzeichnet, daß die digitale Straßenkarte (10) geographische Punkte enthält, die der geographischen Position der dynamischen Verkehrsinformationen (13) entsprechen.

12. Navigationssystem nach einem der Ansprüche 9 bis 11, dadurch gekennzeichnet, daß in der digitalen Straßenkarte (10) zusätzlich Markierungspunkte (20, 21, 22) aufgenommen sind, wobei jedem Datensatz bzw. jedem geographischen Punkt mindestens ein Markierungspunkt (20, 21, 22) zugeordnet ist und daß das Erreichen eines Markierungspunktes (20, 21, 22) die Ausgabe einer Meldung auslöst.

13. Navigationssystem nach Anspruch 12, dadurch gekennzeichnet, daß dem Fahrzeug (14, 14a) ein Kreis (15, 15a) mit dem Fahrzeug (14, 14a) als Mittelpunkt zugeordnet ist und als Markierungspunkt (20) der Schnittpunkt der geographischen Position des dynamischen Verkehrshinweises (13) mit dem Umfang des Kreises (15, 15a) aufgenommen ist.

14. Navigationssystem nach Anspruch 12, dadurch gekennzeichnet, daß dem dynamischen Verkehrshinweis (13) ein Kreis (16) mit der geographischen Position des dynamischen Verkehrshinweises (13) als Mittelpunkt zugeordnet ist und als Markierungspunkt (21) jeder Schnittpunkt einer auf der digitalen Straßenkarte (10) verzeichneten Straße (11, 12) mit dem Umfang des Kreises (16) aufgenommen ist.

15. Navigationssystem nach Anspruch 12, dadurch gekennzeichnet, daß dem dynamischen Verkehrshinweis (13) ein Kreis (16) mit der geographischen Position des dynamischen Verkehrshinweises (13) als Mittelpunkt zugeordnet ist und mehrere Markierungspunkte (22) auf dem Umfang des Kreises (16) aufgenommen sind.

16. Navigationssystem nach einem der Ansprüche 9 bis 15, dadurch gekennzeichnet, daß die Datenbasis (4) bzw. die digitale Straßenkarte (10) Datensätze bzw. geographische Punkte enthält, die der geographischen Position von Servicepunkten wie Tankstellen, Telefonen, Werkstätten und dergleichen und/oder von touristischen Zielen entsprechen.
